# EUROPEAN PATENT SPECIFICATION

(11) **EP 3 694 626 B1**
(45) Date of publication and mention of the grant of the patent: **02.12.2026**
(21) Application number: 18785609.1
(22) Date of filing: 11.10.2018
(51) Int. Cl.: B01D 53/02, B01D 53/04

(54) **METHOD FOR REDUCING THE NITROGEN OXIDE(S) CONTENT IN A COMBUSTION AND/OR EXHAUST GAS**
VERFAHREN ZUR VERRINGERUNG DES STICKOXIDGEHALTS IN EINEM VERBRENNUNGS- UND/ODER ABGAS
PROCÉDÉ DE RÉDUCTION DE LA TENEUR EN OXYDE(S) D'AZOTE DANS UN GAZ DE COMBUSTION OU D'ÉCHAPPEMENT

(30) Priority: 12.10.2017 GB 201716715
(43) Date of publication of application: 19.08.2020
(73) Proprietor: Krajete GmbH, 4061 Pasching (AT)
(72) Inventor: KRAJETE, Alexander, 4061 Pasching (AT); KLINGER, Markus, 4222 Langenstein (AT)
(74) Representative: Maiwald GmbH
(86) International application number: PCT/EP2018/077746
(87) International publication number: WO 2019/072973

(56) References cited:
- US-A1- 2005 247 049
- US-A1- 2009 197 761
- US-A1- 2009 317 307
- US-A1- 2015 158 019

## Description

The present invention relates to a method for reducing the nitrogen oxide(s) content in a combustion and/or exhaust gas of a vehicle and/or an industrial facility, a vehicle or industrial facility comprising a system for reducing the nitrogen oxide(s) content in the combustion and/or exhaust gas as well as the use of a particulate hydrophobic adsorber material for reducing the nitrogen oxide(s) content in a combustion and/or exhaust gas of a vehicle and/or an industrial facility.

In the last three decades, the pollution of the environment has become a major concern, especially in urban areas. Especially pollutants such as CO and NOₓ contribute to the environmental pollution and are said to adversely affect the health of human beings as well as of animals and plants. These pollutants are typically emitted in the environment from combustion processes such as power and heating plants, and motor vehicles and/or production processes such as industrial facilities.

In the art, several attempts have been made to reduce the concentration of such pollutants in media such as gases released into the environment.

For example, US 5,158,582 refers to a method of removing NOx by adsorption wherein a gas containing NOx at a low concentration is brought into contact with an adsorbent comprising a copper salt supported on zeolite serving as a carrier, whereby the NOx is adsorbed and removed efficiently. The adsorbent for use in this method comprises at least one copper salt supported on natural or synthetic zeolite, the copper salt being selected from the group consisting of copper chloride, double salt of copper chloride and ammine complex salt of copper chloride.

US 4,507,271 refers to the removal of nitrous oxide gases containing hydrogen, nitric oxide and nitrous oxide by a process in which the gases are treated with molecular sieves. US 4,533,365 refers to the separation and recycling of NOx gas constituents through adsorption and desorption on a molecular sieve, the molecular sieve is passed through in sequential, alternating process steps. Initially, the NOx is retained up to saturation of the molecular sieve. Thereafter the molecular sieve is regenerated through the introduction of gas. In order to reduce the demands during scavenging of the molecular sieve, and then to facilitate the provision of a closed separating and recycling system, the molecular sieve for regeneration is heated to a temperature for desorbing the adsorbed NOx and scavenged with a portion of the waste gas containing the NOx which is to be cleaned. The scavenging gas flow is recycled after passing through the molecular sieve. US 2009/0197761 A1 relates to an adsorbent for exhaust gas, comprising: a base material, containing a Fe-ZSM-5; and an additive, containing at least one selected from Y-zeolite, mordenite and β-zeolite, wherein the adsorbent is produced by mixing the base material with the additive. US 2015/0158019 A1 relates to a passive NOx, adsorber effective to adsorb NOx at or below a low temperature and release the adsorbed NOx at temperatures above the low temperature, said passive NOx adsorber comprising a noble metal and a small pore molecular sieve having a maximum ring size of eight tetrahedral atoms. US 2009/0317307 A1 refers to an exhaust gas purifying device, including: an HC adsorbent comprising zeolite loaded with at least one of Pd and Ag by ion exchange; and a NOx adsorbent disposed in an exhaust gas passage down-stream of the HC adsorbent and comprising zeolite loaded with at least one selected from the group consisting of Fe, Cu and Co by ion exchange, thereby adsorbing and removing harmful substances contained in a low-temperature exhaust gas immediately after an engine start.

The reversible adsorption of pollutants such as CO₂, CO, NOₓ, SO₂, VOCs, etc. present in combustion and/or exhaust gases using adsorbers is an effective purification method. However, gases released from combustion processes such as from vehicles and industrial facilities always contain water vapor, which is also bound by the used adsorbers, such that the pollutant binding capacity of the adsorber is reduced or even not existing. Thus, one approach for improving the efficiency for adsorbing pollutants such as nitrogen oxides and/or CO is to reduce the water vapor content in the corresponding combustion and/or exhaust gas released from combustion processes e.g. by drying the gas. These are for example condensation over temperature decrease (cooling), condensation via pressure elevation, separation by mechanical means or membranes.

However, these techniques require elaborate materials, equipment and controlling of several units in which the water vapour is removed from the gas first followed by the pollutant adsorption on the adsorber material.

Thus, there is still a need in the art for methods reducing the nitrogen oxide(s) content in a combustion and/or exhaust gas of a vehicle and/or an industrial facility which can be achieved without elaborate materials, equipment and controlling of several units.

It is thus an object of the present invention to provide a method for reducing the nitrogen oxide(s) content in a combustion and/or exhaust gas of a vehicle and/or an industrial facility. Another object may also be seen in the provision of a method for reducing the nitrogen oxide(s) content in a combustion and/or exhaust gas of a vehicle and/or an industrial facility that effectively decreases the amount of nitrogen oxide(s) in the combustion and/or exhaust gas released from the vehicle and/or an industrial facility. A further object may be seen in the provision of a method for reducing the nitrogen oxide(s) content in a combustion and/or exhaust gas of a vehicle and/or an industrial facility without the requirement of reducing the water vapour content in the gas. Another object may be seen in the provision of a method for reducing the nitrogen oxide(s) content in a combustion and/or exhaust gas of a vehicle and/or an industrial facility which can be carried out without elaborate materials and equipment and the controlling of several units. A still further object may be seen in the provision of a method for reducing the nitrogen oxide(s) content in a combustion and/or exhaust gas of a vehicle and/or an industrial facility enabling increasing the efficiency of such a method, especially as regards time and the consumption of chemicals.

One or more of the foregoing and other problems are solved by the subject-matter as defined herein in the independent claims. Advantageous embodiments of the present invention are defined in the corresponding sub-claims.

According to one aspect of the present application a method for reducing the nitrogen oxide(s) content in a combustion and/or exhaust gas of a vehicle and/or an industrial facility is provided. The method comprising, more preferably consisting of, the following steps:
a) providing a particulate hydrophobic adsorber material, wherein the particulate hydrophobic adsorber material has a rod-like structure and is an aluminosilicate zeolite having a mole ratio of Si to Al (Si:Al) in the range from 40:1 to 10:1, and
   i) being composed of regular three-dimensional pentagonal arrangements of atoms (pentasil units), and
   ii) having a diameter in the range from 0.8 to 10 mm, and
   iii) having a length in the range from 1 to 15 mm, and
   iv) having a pore size of the channels in the range from 5.6 to 6.5 Å, and
b) v) having a BET specific surface area as measured by the BET nitrogen method of at least 400 m²/g,providing a combustion and/or exhaust gas comprising water vapour and one or more nitrogen oxide(s), and
c) contacting the particulate hydrophobic adsorber material of step a) at a temperature ranging from 20 to 80 °C with the combustion and/or exhaust gas of step b) for adsorbing at least a part of the one or more nitrogen oxide(s) from the combustion and/or exhaust gas onto the surface and/or into the pores of the particulate hydrophobic adsorber material.

Also described herein is a system for reducing the nitrogen oxide(s) content in the combustion and/or exhaust gas. The system comprising one or more unit(s) comprising, preferably consisting of, a particulate hydrophobic adsorber material, preferably the particulate hydrophobic adsorber material is an aluminosilicate zeolite, more preferably the particulate hydrophobic adsorber material is an aluminosilicate zeolite having a mole ratio of Si to Al (Si:Al) in the range from 40:1 to 10: 1, wherein the system is placed in a vehicle and/or an industrial facility.

According to a further aspect of the present invention, a vehicle or industrial facility comprising a system for reducing the nitrogen oxide(s) content in the combustion and/or exhaust gas is provided, the system comprising one or more unit(s) comprising a particulate hydrophobic adsorber material, wherein the particulate hydrophobic adsorber material has a rod-like structure and is an aluminosilicate zeolite having a mole ratio of Si to Al (Si:Al) in the range from 40:1 to 10:1, and
i) being composed of regular three-dimensional pentagonal arrangements of atoms (pentasil units), and
ii) having a diameter in the range from 0.8 to 10 mm, and
iii) having a length in the range from 1 to 15 mm, and
iv) having a pore size of the channels in the range from 5.6 to 6.5 Å, and
v) having a BET specific surface area as measured by the BET nitrogen method of at least 400 m²/g,
wherein the system is placed in the vehicle and/or the industrial facility.

According to still a further aspect of the present invention, the use of a particulate hydrophobic adsorber material having a a rod-like structure and being an aluminosilicate zeolite having a mole ratio of Si to Al (Si:Al) in the range from 40:1 to 10:1, as defined herein for reducing the nitrogen oxide(s) content in a combustion and/or exhaust gas of a vehicle and/or an industrial facility is provided, wherein the particulate hydrophobic adsorber material is
i) being composed of regular three-dimensional pentagonal arrangements of atoms (pentasil units), and
ii) having a diameter in the range from 0.8 to 10 mm, and
iii) having a length in the range from 1 to 15 mm, and
iv) having a pore size of the channels in the range from 5.6 to 6.5 Å, and
v) having a BET specific surface area as measured by the BET nitrogen method of at least 400 m²/g.

The particulate hydrophobic adsorber material is an aluminosilicate zeolite.

The particulate hydrophobic adsorber material is an aluminosilicate zeolite having a mole ratio of Si to Al (Si:Al) in the range from 40:1 to 10:1.

The particulate hydrophobic adsorber material is an aluminosilicate zeolite i) being composed of regular three-dimensional pentagonal arrangements of atoms (pentasil units), preferably the pentasil units are linked together by oxygen bridges to form pentasil chains, more preferably the pentasil chains are linked together by oxygen bridges to form corrugated sheets, and ii) having a diameter in the range from 0.8 to 10 mm, preferably from 0.8 to 6 mm, more preferably from 0.8 to 4 mm, even more preferably from 0.8 to 2.5 mm and most preferably from 1.0 to 2.0 mm, and iii) having a length in the range from 1 to 15 mm, preferably from 1.5 to 10 mm, more preferably from 2.5 to 5 mm and most preferably from 2.8 to 4.5 mm, and iv) having a pore size of the channels in the range from 5.6 to 6.5 Ǻ, preferably from 5.8 to 6.2 Ǻ, and v) having a BET specific surface area as measured by the BET nitrogen method of at least 400 m²/g, more preferably in the range from 400 to 1 000 m²/g, preferably from 400 to 800 m²/g.

According to one embodiment of the present method, the particulate hydrophobic adsorber material of step a) is provided in form of a powder, crushed material, granulated powder, extrudated material, pellets, tablets, pressed or sintered material, filter material, in a column and/or cartridge.

According to another embodiment of the present method, the combustion and/or exhaust gas of step b) is a gas mixture resulting from exhaust fumes, factory fumes, industrial fumes, vehicle exhausts, and mixtures thereof.

According to yet another embodiment of the present method, the combustion and/or exhaust gas of step b) comprises water vapour in an amount of at least 10 g/Nm³, preferably in an amount ranging from 10 to 200 g/Nm³, more preferably from 10 to 150 g/Nm³ and most preferably from 10 to 100 g/Nm³ at a temperature of 0 to 100 °C and a pressure of 20 to 200 mbar, measured before its contacting with the adsorber material.

According to one embodiment of the present method, the one or more nitrogen oxide(s) is/are selected from the group comprising NO, NO₂, N₂O, N₄O, N₂O₃, N₂O₄, N₂O₅, N₄O₆, NO₂⁻, NO₃⁻ and mixtures thereof.

According to another embodiment of the present method, the vehicle is selected from a car, truck, bus, ship, train, boat or aircraft and/or the industrial facility is selected from incineration plants, cement burning, refineries, biogas plants, production plants or steel industry.

Step c) is carried out at a temperature ranging from 20 to 80 °C, preferably from 25 to 80 °C and most preferably from 30 to 80 °C.

According to one embodiment of the present method, the reduction of the nitrogen oxide(s) content in the combustion and/or exhaust gas is substantially obtained by physisorption.

According to another embodiment of the present method, the reduction of the nitrogen oxide(s) content in the combustion and/or exhaust gas is achieved when the nitrogen oxide(s) content in the combustion and/or exhaust gas obtained after contacting step c) is below the nitrogen oxide(s) content in the combustion and/or exhaust gas of step b), preferably the nitrogen oxide(s) content in the combustion and/or exhaust gas obtained after contacting step c) is at least 10 vol.-%, more preferably at least 20 vol.-%, even more preferably at least 30 vol.-% and most preferably at least 35 vol.-%, based on the total volume of nitrogen oxide(s) content in the combustion and/or exhaust gas of step b), below the nitrogen oxide(s) content in the combustion and/or exhaust gas of step b).

Where the term "comprising" is used in the present description and claims, it does not exclude other non-specified elements of major or minor functional importance.

For the purposes of the present invention, the term "consisting of" is considered to be a preferred embodiment of the term "comprising of". If hereinafter a group is defined to comprise at least a certain number of embodiments, this is also to be understood to disclose a group, which preferably consists only of these embodiments.

Whenever the terms "including" or "having" are used, these terms are meant to be equivalent to "comprising" as defined above.

Where an indefinite or definite article is used when referring to a singular noun, e.g. "a", "an" or "the", this includes a plural of that noun unless something else is specifically stated.

Terms like "obtainable" or "definable" and "obtained" or "defined" are used interchangeably. This e.g. means that, unless the context clearly dictates otherwise, the term "obtained" does not mean to indicate that e.g. an embodiment must be obtained by e.g. the sequence of steps following the term "obtained" even though such a limited understanding is always included by the terms "obtained" or "defined" as a preferred embodiment.

As set out above, the inventive for reducing the nitrogen oxide(s) content in a combustion and/or exhaust gas of a vehicle and/or an industrial facility comprises the steps a), b) and c). In the following, it is referred to further details of the present invention and especially the foregoing steps of the inventive for reducing the nitrogen oxide(s) content in a combustion and/or exhaust gas of a vehicle and/or an industrial facility. Those skilled in the art will understand that many embodiments described herein can be combined or applied together.

### Characterisation of step a): provision of a particulate hydrophobic adsorber material

According to step a) of the method of the present invention, a particulate hydrophobic adsorber material is provided.

It is appreciated that the particulate hydrophobic adsorber material comprises, preferably consists of, one or more particulate hydrophobic adsorber material(s).

In one embodiment of the present invention, the particulate hydrophobic adsorber material comprises, preferably consists of, one particulate hydrophobic adsorber material. Alternatively, the particulate hydrophobic adsorber material comprises, preferably consists of, two or more particulate hydrophobic adsorber materials. For example, the particulate hydrophobic adsorber material comprises, preferably consists of, two or three or four particulate hydrophobic adsorber materials.

Preferably, the particulate hydrophobic adsorber material comprises, preferably consists of, one particulate hydrophobic adsorber material.

It is to be noted that the term "one or more" particulate hydrophobic adsorber material(s) in the meaning of the present invention means that the particulate hydrophobic adsorber material comprises one or more kinds of particulate hydrophobic adsorber material(s). That is to say, if the particulate hydrophobic adsorber material comprises, preferably consists of, two or more particulate hydrophobic adsorber materials, the two or more particulate hydrophobic adsorber materials are selected from different materials. In this embodiment, the two or more particulate hydrophobic adsorber materials are preferably provided in form of a mixture, i.e. in the same unit of the system.

It is appreciated that the particulate adsorber material can be any kind of adsorber material as long as it is hydrophobic. The term "hydrophobic" in the meaning of the present invention refers to a non-polar material, i.e. a material that repels water. It is appreciated that the hydrophobic adsorber material provides weaker Van-der-Waals inter molecular forces than a hydrophilic adsorber material. In particular, the Van-der-Waals inter molecular forces of the hydrophobic adsorber material is an order of magnitude lower than that on a hydrophilic adsorber material.

The hydrophobicity of the adsorber material can be also expressed by its moisture adsorption capacity. For example, the particulate hydrophobic adsorber material has a moisture adsorption capacity at 40 °C of less than 10 wt.-%, based on the total weight of the particulate hydrophobic adsorber material. Preferably, the particulate hydrophobic adsorber material has a moisture adsorption capacity at 40 °C of less than 8 wt.-% and most preferably of less than 5 wt.-%, based on the total weight of the particulate hydrophobic adsorber material. For example, the particulate hydrophobic adsorber material has a moisture adsorption capacity at 40 °C in the range from 0.1 to 10 wt.-%, more preferably from 0.1 to 8 wt.-%, and most preferably from 0.2 to 5 wt.-%, based on the total weight of the particulate hydrophobic adsorber material.

It is appreciated that, if not otherwise indicated, the moisture adsorption capacity at 40 °C is determined at a relative humidity of 100 %, based on the total volume of the combustion and/or exhaust gas.

The particulate hydrophobic adsorber material is an aluminosilicate zeolite.

Aluminosilicate zeolites are well known in the art and are commercially available from a great variety of sources.

The particulate hydrophobic adsorber material being aluminosilicate zeolite is especially characterized by a high mole ratio of Si to Al which is advantageous for achieving the desired hydrophobicity of the adsorber material. The particulate hydrophobic adsorber material is an aluminosilicate zeolite having a mole ratio in the range from 40:1 to 10: 1.

Additionally or alternatively, the particulate hydrophobic adsorber material being aluminosilicate zeolite has a content of SiO₂ of below 18 wt.-%, preferably of below 15 wt.-% and most preferably of below 10 wt.-%, based on the total weight of the aluminosilicate zeolite.

The particulate hydrophobic adsorber material, i.e. the aluminosilicate zeolite, is composed of pentasil units, i.e. of regular three-dimensional pentagonal arrangements of atoms. It is appreciated that the pentasil unit consists of eight five-membered rings, wherein the vertices are Al or Si and O is bonded between the vertices. This structure is particularly preferred in order to achieve a high adsorption rate for the nitrogen oxide(s) and/or CO.

It is further preferred that the pentasil units are linked together by oxygen bridges to form pentasil chains. More preferably, the pentasil chains are to each other by oxygen bridges to form corrugated sheets. The corrugated sheets are preferably composed of 10-ring holes, wherein each 10-ring hole has Al and Si as vertices and an O bonded between each vertex. It is noted that also the corrugated sheets are preferably connected by oxygen bridges to each other such that straight 10-ring channels running parallel to the corrugations and sinusoidal 10-ring channels perpendicular to the sheets are formed, i.e. a three-dimensional structure is formed. It is appreciated that adjacent layers of the sheets are related by an inversion point.

The particulate hydrophobic adsorber material, i.e. the aluminosilicate zeolite, has a pore size of the channels in the range from 5.6 to 6.5 Ǻ. Most preferably, the particulate hydrophobic adsorber material, i.e. the aluminosilicate zeolite, has a pore size of the channels in the range from 5.8 to 6.2 Ǻ. The pore size is measured using an electron microscopy or a mercury porosimetry measurement according to methods well known in the art, e.g. from M. Ternan, O.M. Fuller "A comparison of methods used to measure pore size in solids", The Canadian Journal of Chemical Engineering, Vol. 57, 1979, p. 750-757. The mercury porosimetry measurement is preferably carried out in accordance with ISO 15901-1:2016.

The particulate hydrophobic adsorber material, i.e. the aluminosilicate zeolite, of step a) has a rod-like structure. That is to say, the particulate hydrophobic adsorber material, i.e. the aluminosilicate zeolite, has a shorter and a longer dimension.

Thus, the particulate hydrophobic adsorber material, i.e. the aluminosilicate zeolite, has a diameter in the range from 0.8 to 10 mm, preferably from 0.8 to 6 mm, more preferably from 0.8 to 4 mm, even more preferably from 0.8 to 2.5 mm and most preferably from 1.0 to 2.0 mm. It is especially preferred that the particulate hydrophobic adsorber material, i.e. the aluminosilicate zeolite, has a diameter in the range from 0.8 to 2.5 mm and preferably from 1.0 to 2.0 mm. It is appreciated that the diameter refers to the shorter dimension of the particulate hydrophobic adsorber material, i.e. the aluminosilicate zeolite.

Additionally, the particulate hydrophobic adsorber material, i.e. the aluminosilicate zeolite, has a length in the range from 1 to 15 mm, preferably from 1.5 to 10 mm, more preferably from 2.5 to 5 mm and most preferably from 2.8 to 4.5 mm. It is especially preferred that the particulate hydrophobic adsorber material, i.e. the aluminosilicate zeolite, has a length in the range from 2.5 to 5 mm and preferably from 2.8 to 4.5 mm. It is appreciated that the length refers to the longer dimension of the particulate hydrophobic adsorber material, i.e. the aluminosilicate zeolite.

For example, the particulate hydrophobic adsorber material, i.e. the aluminosilicate zeolite, has a diameter in the range from 0.8 to 2.5 mm, preferably from 1.0 to 2.0 mm, and a length in the range from 2.5 to 5 mm, preferably from 2.8 to 4.5 mm. It is particularly preferred that the particulate hydrophobic adsorber material, i.e. the aluminosilicate zeolite, has a diameter in the range from 1.0 to 2.0 mm, and a length in the range from 2.8 to 4.5 mm.

The diameter and length of the particulate hydrophobic adsorber material, i.e. the aluminosilicate zeolite, can be e.g, determined by optical methods such as light microscopy. Alternatively, the diameter and length of the particulate hydrophobic adsorber material, i.e. the aluminosilicate zeolite, is determined by electron microscopy. Such methods are well known in the art and the skilled person will easily adapt the measurement conditions according to his measurement equipment.

Additionally, the particulate hydrophobic adsorber material, i.e. the aluminosilicate zeolite, of step a) has a BET specific surface area as measured by the BET nitrogen method of at least 400 m²/g, more preferably in the range from 400 to 1 000 m²/g, preferably from 400 to 800 m²/g.

The "BET specific surface area" of the particulate hydrophobic adsorber material, i.e. the aluminosilicate zeolite, in the meaning of the present invention is measured by nitrogen adsorption using the BET isotherm (ISO 9277:2010), and is specified in m²/g.

In view of the above, the particulate hydrophobic adsorber material, i.e. the aluminosilicate zeolite, of step a)
i) is composed of regular three-dimensional pentagonal arrangements of atoms (pentasil units), preferably the pentasil units are linked together by oxygen bridges to form pentasil chains, more preferably the pentasil chains are linked together by oxygen bridges to form corrugated sheets, and
ii) has a diameter in the range from 0.8 to 10 mm, preferably from 0.8 to 6 mm, more preferably from 0.8 to 4 mm, even more preferably from 0.8 to 2.5 mm and most preferably from 1.0 to 2.0 mm, and
iii) has a length in the range from 1 to 15 mm, preferably from 1.5 to 10 mm, more preferably from 2.5 to 5 mm and most preferably from 2.8 to 4.5 mm, and
iv) has a pore size of the channels in the range from 5.6 to 6.5 Ǻ, preferably from 5.8 to 6.2 Ǻ, and
v) has a BET specific surface area as measured by the BET nitrogen method of at least 400 m²/g, more preferably in the range from 400 to 1 000 m²/g, preferably from 400 to 800 m²/g.

Additionally or alternatively, the particulate hydrophobic adsorber material, i.e. the aluminosilicate zeolite, of step a) has a crush strength of at least 4 N, more preferably of from 4 to 400 N, even more preferably from 4 to 200 N and most preferably of from 5 to 150 N.

The "crush strength" of the particulate hydrophobic adsorber material, i.e. the aluminosilicate zeolite, in the meaning of the present invention is measured by using ASTM D4179, ASTM D6175 and ASTM D7084.

Additionally or alternatively, the particulate hydrophobic adsorber material, i.e. the aluminosilicate zeolite, of step a) has a bulk density of at least 300 kg/m³, more preferably of from 300 to 1 000 kg/m³ and most preferably of from 500 to 900 kg/m³.

The "bulk density" of the particulate hydrophobic adsorber material, i.e. the aluminosilicate zeolite, in the meaning of the present invention is measured in accordance with ASTM C29 / C29M, ASTM D6683 or ASTM D7481.

It is required that the particulate hydrophobic adsorber material, i.e. the aluminosilicate zeolite, of step a) is provided in particulate form. Preferably, the particulate hydrophobic adsorber material, i.e. the aluminosilicate zeolite, of step a) is provided in form of a powder, crushed material, granulated powder, pellets, tablets, pressed or sintered material, filter material, in a column and/or cartridge.

It is appreciated that the particulate hydrophobic adsorber material, i.e. the aluminosilicate zeolite, of step a) is provided such that a flow of gas through the particles of the adsorber material is achieved. Furthermore, it is advantageous that the back pressure in the system is low. Thus, it is preferred that the particulate hydrophobic adsorber material, i.e. the aluminosilicate zeolite, of step a) is provided as particulate adsorber material having relatively big particles and high interparticle space.

Thus, it is preferred that the particulate hydrophobic adsorber material, i.e. the aluminosilicate zeolite, of step a) is provided as pellets, tablets, in a column and/or cartridge.

For example, the particulate hydrophobic adsorber material, i.e. the aluminosilicate zeolite, of step a) is provided in a column and/or cartridge. Preferably, the particulate hydrophobic adsorber material, i.e. the aluminosilicate zeolite, of step a) is provided as pellets or tablets in a column and/or cartridge.

In one embodiment, the particulate hydrophobic adsorber material, i.e. the aluminosilicate zeolite, of step a) can be provided in one or more column(s) and/or cartridge(s). If the particulate hydrophobic adsorber material, i.e. the aluminosilicate zeolite, of step a) is provided in two or more column(s) and/or cartridge(s) they are preferably arranged in parallel or in series. For example, if the particulate hydrophobic adsorber material, i.e. the aluminosilicate zeolite, of step a) is provided in two or more column(s) and/or cartridge(s) they are preferably arranged in parallel.

In one embodiment, the particulate hydrophobic adsorber material, i.e. the aluminosilicate zeolite, of step a) is provided in 2 to 10, preferably 2 to 8 and most preferably 2 to 6, column(s) and/or cartridge(s) which are arranged in parallel or in series. For example, the particulate hydrophobic adsorber material, i.e. the aluminosilicate zeolite, of step a) is provided in 2 to 10, preferably 2 to 8 and most preferably 2 to 6, column(s) and/or cartridge(s) which are arranged in parallel.

### Characterisation of step b):provision of a combustion and/or exhaust gas

According to step b) of the present method, a combustion and/or exhaust gas is provided.

The term "gas" refers to a medium that exists in a gaseous or vaporous state, e.g. in a temperature range from -20 to 160°C.

It is appreciated that the combustion and/or exhaust gas is preferably a gas mixture resulting from exhaust fumes, factory fumes, industrial fumes, vehicle exhausts, and mixtures thereof. For example, the combustion and/or exhaust gas is a gas mixture resulting from the combustion of a hydrocarbon based fuel. For example, the hydrocarbon based fuel is selected from the group consisting of methane, propane, butane, petrol, diesel, jet fuel (or kerosene), natural gas, gasoline, fuel oil, coal, wood, methanol, dimethylether (DME), ethanol, biogas, biofuel, industrial fuel gas, syngas, waste incineration gas or mixtures thereof. Preferably, the hydrocarbon fuel is methane, diesel or gasoline. Herein, the terms gasoline and petrol are exchangeable. Furthermore, the terms jet fuel and kerosene are exchangeable.

The combustion takes place in a vehicle and/or in an industrial facility. Preferably, the combustion takes place in a vehicle or in an industrial facility.

For example, the vehicle is selected from a car, truck, bus, ship, train, boat or aircraft. The vehicle may also be any other possible vehicle. The industrial facility is preferably selected from incineration plants, cement burning, refineries, biogas plants, production plants or steel industry.

It is appreciated that the inventive method is especially suitable for combustion and/or exhaust gases comprising one or more nitrogen oxide(s).

The term "nitrogen oxide(s)" refers to compound(s) comprising nitrogen oxide(s) or compound(s) that are obtained by their reaction with water, e.g. air humidity. The one or more nitrogen oxide(s) is/are thus preferably selected from the group comprising NO, NO₂, N₂O, N₄O, N₂O₃, N₂O₄, N₂O₅, N₄O₆, NO₂⁻, NO₃⁻ and mixtures thereof.

Accordingly, the combustion and/or exhaust gas comprises one or more nitrogen oxide(s) selected from the group comprising NO, NO₂, N₂O, N₄O, N₂O₃, N₂O₄, N₂O₅, N₄O₆, NO₂⁻, NO₃⁻ and mixtures thereof.

The term "one or more" nitrogen oxide(s) means that the nitrogen oxide comprises, preferably consists of, one or more kinds of nitrogen oxide(s).

In one embodiment, the one or more nitrogen oxide(s) comprises, preferably consists of, one kind of nitrogen oxide. Alternatively, the one or more nitrogen oxide(s) comprises, preferably consists of, two or more kinds of nitrogen oxides. For example, the one or more nitrogen oxide(s) comprises, preferably consists of, two or three or four kinds of nitrogen oxides.

It is appreciated that the combustion and/or exhaust gas provided in step b) can be any gas as long as it comprises one or more nitrogen oxide(s). Thus, the combustion and/or exhaust gas can be any natural or artificial gas comprising one or more nitrogen oxide(s).

In one embodiment, the combustion and/or exhaust gas provided in step b) preferably comprises a mixture of nitrogen oxides. For example, the combustion and/or exhaust gas provided in step b) preferably comprises two or more compounds selected from the group comprising NO, NO₂, N₂O, N₄O, N₂O₃, N₂O₄, N₂O₅, N₄O₆, NO₂⁻ and NO₃⁻.

It is to be noted that the combustion and/or exhaust gas further comprises water vapour. One advantage of the present invention is that the water vapour must not be reduced to a specific content or removed before method step c) is carried out. That is to say, method step c) is carried out in the presence of the water vapour present in the combustion and/or exhaust gas. Thus, the method can be carried out without elaborate materials and equipment and the controlling of several units in which the water vapour must be reduced or removed first in order to reduce the content of nitrogen oxide(s) in a following step.

Preferably, the combustion and/or exhaust gas comprises the water vapour in an amount of at least 10 g/Nm³, preferably in an amount ranging from 10 to 200 g/Nm³, more preferably from 10 to 150 g/Nm³ and most preferably from 10 to 100 g/Nm³ at a temperature of 0 to 100 °C and a pressure of 20 to 200 mbar, measured before its contacting with the particulate adsorber material. For example, the pressure is achieved at the exhaust pipe right before the combustion and/or exhaust gas is contacted with the particulate hydrophobic adsorber material.

It is appreciated that the particulate hydrophobic adsorber material, i.e. the aluminosilicate zeolite, of step a) is placed in the vehicle and/or industrial facility in which the combustion takes place.

### Characterisation of step c): contacting the particulate hydrophobic adsorber material with the combustion and/or exhaust gas

According to step c) of the present method, the particulate hydrophobic adsorber material of step a) is contacted at a temperature ranging from 20 to 80 °C with the combustion and/or exhaust gas of step b) for adsorbing at least a part of the one or more nitrogen oxide(s) from the combustion and/or exhaust gas onto the surface and/or into the pores of the particulate hydrophobic adsorber material.

In general, the particulate hydrophobic adsorber material, i.e. the aluminosilicate zeolite, of step a) and the combustion and/or exhaust gas of step b) can be brought into contact by any conventional means known to the skilled person.

For example, contacting step c) is carried out by passing the combustion and/or exhaust gas of step b) through the particulate hydrophobic adsorber material, i.e. the aluminosilicate zeolite, of step a). This embodiment is especially preferred if the particulate hydrophobic adsorber material, i.e. the aluminosilicate zeolite, of step a) is provided in form of a column, cartridge, or filter material.

It is appreciated that the particulate hydrophobic adsorber material, i.e. the aluminosilicate zeolite, of step a) is contacted with the combustion and/or exhaust gas of step b) at a concentration and for a time sufficient for taking up the one or more nitrogen oxide(s) from the combustion and/or exhaust gas onto the surface and/or into the pores of the particulate hydrophobic adsorber material, i.e. the aluminosilicate zeolite.

It is appreciated that contacting step c) can be carried out over a broad temperature and pressure range. For example, contacting step c) is carried out at the temperature and pressure conditions typically applied in the vehicle and/or industrial facility in which the combustion takes place.

Thus, contacting step c) is carried out at a temperature ranging from 20 to 80 °C, preferably from 25 to 80 °C and most preferably from 30 to 80 °C.

Additionally or alternatively, contacting step c) is carried out at a pressure ranging from 1 to 200 mbar, preferably from 5 to 150 mbar and most preferably from 10 to 100 mbar, e.g. from 15 to 50 mbar.

In one embodiment, contacting step c) is preferably carried out at a temperature ranging from 20 to 80 °C, more preferably from 25 to 80 °C and most preferably from 30 to 80 °C and at a pressure ranging from 1 to 200 mbar, preferably from 5 to 150 mbar and most preferably from 10 to 100 mbar, e.g. from 15 to 50 mbar.

The term "adsorption" or "adsorbing" in the meaning of the present invention is understood as the adhesion of nitrogen oxide(s) molecules to the surface and/or into the pores of the particulate hydrophobic adsorber material, i.e. the aluminosilicate zeolite, whereby the adsorbent builds up a layer on the surface or in the pores of the adsorber. It is a surface phenomenon. This process differs from absorption, in which a fluid (the absorbate) permeates or is dissolved by a liquid or solid (the absorbent). Adsorption is a surface-based process while absorption involves the whole volume of the material.

It is appreciated that the reduction of the nitrogen oxide(s) content in the combustion and/or exhaust gas is substantially obtained by physisorption.

In general, the amount of nitrogen oxide(s) adsorbed from the combustion and/or exhaust gas by the particulate hydrophobic adsorber material, i.e. the aluminosilicate zeolite, may vary depending on the nitrogen oxide(s) content in the combustion and/or exhaust gas and the particulate hydrophobic adsorber material used.

However, it is preferred that the reduction of the nitrogen oxide(s) content in the combustion and/or exhaust gas is achieved when the nitrogen oxide(s) content in the combustion and/or exhaust gas obtained after contacting step c) is below the nitrogen oxide(s) content in the combustion and/or exhaust gas of step b).

For example, the nitrogen oxide(s) content in the combustion and/or exhaust gas obtained after contacting step c) is at least 10 vol.-%, more preferably at least 20 vol.-%, even more preferably at least 30 vol.-% and most preferably at least 35 vol.-%, based on the total volume of nitrogen oxide(s) content in the combustion and/or exhaust gas of step b), below the nitrogen oxide(s) content in the combustion and/or exhaust gas of step b).

It is to be noted that substantially no adsorption of water vapour is observed. That is to say, the water vapour in the combustion and/or exhaust gas before and after method step c) is substantially the same. For example, the water vapour content in the combustion and/or exhaust gas obtained after contacting step c) is at most 20 vol.-%, more preferably at most 18 vol.-%, even more preferably at most 14 vol.-% and most preferably at most 10 vol-%, e.g. at most 8 vol.-% or 5 vol.-%, based on the total volume of water vapour content in the combustion and/or exhaust gas of step b), below the water vapour content in the combustion and/or exhaust gas of step b).

It is appreciated that contacting step c) can be repeated one or more times.

Accordingly, the combustion and/or exhaust gas obtained in step c) preferably has a nitrogen oxide(s) content below the nitrogen oxide(s) content of the combustion and/or exhaust gas provided in step b).

When the maximum capacity of the particulate hydrophobic adsorber material, i.e. the aluminosilicate zeolite, is reached, the combustion and/or exhaust gas is preferably redirected onto at least one further particulate hydrophobic adsorber material.

It is appreciated that the particulate hydrophobic adsorber material, i.e. the aluminosilicate zeolite, may be regenerated by using a high temperature, e.g. at least 200 °C, preferably from 200 to 400 °C. In one embodiment, the particulate hydrophobic adsorber material, i.e. the aluminosilicate zeolite, may be regenerated by using a high temperature, e.g. at least 200 °C, preferably from 200 to 400 °C, in combination with underpressure and/or a carrier gas.

Also described herein is a system for reducing the nitrogen oxide(s) content in a combustion and/or exhaust gas of a vehicle and/or an industrial facility, the system comprising one or more unit(s) comprising the particulate hydrophobic adsorber material, i.e. the aluminosilicate zeolite having a mole ratio of Si to Al (Si:Al) in the range from 40:1 to 10:1, wherein the system is placed in a vehicle and/or an industrial facility.

With regard to the definition of the system for reducing the nitrogen oxide(s) content in a combustion and/or exhaust gas of a vehicle and/or an industrial facility, the particulate hydrophobic adsorber material and preferred embodiments thereof, reference is made to the statements provided above when discussing the technical details of the method for reducing the nitrogen oxide(s) content in a combustion and/or exhaust gas of a vehicle and/or an industrial facility of the present invention.

As the particulate hydrophobic adsorber material, i.e. the aluminosilicate zeolite, of step a) is not suitable for adsorbing water vapour, i.e. does not substantially reduce the water vapour, it is appreciated that the system can be configured without an adsorber material suitable for adsorbing water vapour.

Thus, the system of the present invention is preferably configured in that no unit comprising adsorber material suitable for adsorbing water is located before the one or more unit(s) comprising the particulate hydrophobic adsorber material as defined herein.

It is preferred that the one or more unit(s) comprising the particulate hydrophobic adsorber material, i.e. the aluminosilicate zeolite, are in the form of a column and/or cartridge. Alternatively, the one or more unit(s) can comprise one or more column(s) and/or cartridge(s).

A "column" and/or "cartridge" may be any container which can contain the particulate hydrophobic adsorber material, i.e. the aluminosilicate zeolite, for reducing the nitrogen oxide(s) content and which can be placed in a stream of combustion and/or exhaust gas to adsorb the nitrogen oxide(s). The cartridge may be in the form of an axial flow scrubber, wherein the combustion and/or exhaust gas linearly passes through the adsorbent in the cartridge, in the form of a radial flow scrubber, wherein the combustion and/or exhaust gas first passes the sorbent in vertical direction and then leaves the adsorbent material from the middle to the outer part in horizontal direction or the other way round.

The column and/or cartridge design must take the following aspects into consideration: A) the surface area of the particulate hydrophobic adsorber material, i.e. the aluminosilicate zeolite, needs to be adequate to the percentage of nitrogen oxide(s) in the combustion and/or exhaust gas and the time period the particulate hydrophobic adsorber material should capture the nitrogen oxide(s) without desorption taking place. B) The gas flow rate needs to be slow enough for the nitrogen oxide(s) to be absorbed or adsorbed (dwell time). C) Optimal packing of the particulate hydrophobic adsorber material to avoid that a path is formed which allows the combustion and/or exhaust gas to pass the particulate hydrophobic adsorber material without being captured (known as channeling). For this purpose, a net/grid/diffuser is placed inside the cartridge and along its longitudinal direction.

The one or more unit(s), preferably the column and/or cartridge, may have any form suitable for performing the method of the invention. Examples of such forms are cylindrical, conical, cube-shaped, cuboid, and others and mixtures thereof. In one embodiment, the one or more unit(s), preferably the column and/or cartridge, has/have a cylindrical form. Further, the one or more unit(s), preferably the column and/or cartridge, is/are suitable for containing the particulate hydrophobic adsorber material and has at least one opening for entry of the combustion and/or exhaust gas and at least one opening for exit of the combustion and/or exhaust gas.

It is preferred to install more than one unit, preferably more than one column and/or cartridge, in parallel in one single industrial facility or vehicle. In one embodiment, it is especially preferred to install more than one unit, preferably more than one column and/or cartridge, in series in one single industrial facility or vehicle. This embodiment is advantageous for further reducing the amount of nitrogen oxide(s) content in the same stream of the combustion and/or exhaust gas. For example, two units, preferably two columns and/or cartridges, are installed in series in one single industrial facility or vehicle. Alternatively, two units, preferably two columns and/or cartridges, are installed in parallel in one single industrial facility or vehicle.

The present invention further provides a vehicle or industrial facility comprising the system described herein.

With regard to the definition of the vehicle or industrial facility comprising the system and preferred embodiments thereof, reference is made to the statements provided above when discussing the technical details of the method for reducing the nitrogen oxide(s) content in a combustion and/or exhaust gas of a vehicle and/or an industrial facility and the system for reducing the nitrogen oxide(s) content in a combustion and/or exhaust gas of a vehicle and/or an industrial facility of the present invention.

The present invention also comprises the use of the particulate hydrophobic adsorber material, i.e. the aluminosilicate zeolite having a mole ratio of Si to Al (Si:Al) in the range from 40:1 to 10: 1, for reducing the nitrogen oxide(s) content in a combustion and/or exhaust gas of a vehicle and/or an industrial facility.

With regard to the definition of the particulate hydrophobic adsorber material and preferred embodiments thereof, reference is made to the statements provided above when discussing the technical details of the method for reducing the nitrogen oxide(s) content in a combustion and/or exhaust gas of a vehicle and/or an industrial facility.

The present invention is further characterized by means of the following example:

### EXAMPLE

The complete exhaust gas of a premium vehicle fulfilling the EURO 6 norm was passed through a cartridge comprising aluminosilicate zeolite as the particulate hydrophobic adsorber material at a flow of about 10 Nm³/h. The cartridge had a volume of 9 L which was filled with about 7 L (corresponding to about 5 kg) of the particulate hydrophobic adsorber material. The aluminosilicate zeolite was composed of pentasil units which are linked together by oxygen bridges to form pentasil chains, which are further linked together by oxygen bridges to form corrugated sheets. The aluminosilicate zeolite had a mole ratio of Si to Al (Si:Al) from 40:1 to 10: 1, a diameter from 1.0 to 2.0 mm, a length from 2.8 to 4.5 mm, a pore size of the channels from 5.8 to 6.2 Ǻ, and a BET specific surface area as measured by the BET nitrogen method from 400 to 800 m²/g. The set up was carried out without a water vapour adsorbing unit before the cartridge comprising the particulate hydrophobic adsorber material. At the inlet and outlet of the cartridge comprising the particulate hydrophobic adsorber material the amount of nitrogen oxides and CO in the exhaust gas was measured by using a Testo 340 exhaust gas measurement device. The temperature at the cartridge outlet was between 25 und 80 °C throughout the experiment. The measurement was carried out over a period of 37.4 hours in standby mode in several measurement intervals of 1 to 10 h length.

The exhaust gas entering the cartridge comprising the particulate hydrophobic adsorber material had an average volume of about 200 ppm NOₓ at a relative humidity close to saturation point (80 to 100 % rH). The exhaust gas exiting the cartridge comprising the particulate hydrophobic adsorber material had an average volume of about 100 ppm NOₓ at a relative humidity close to saturation point (80 to 100 % rH).

As a result, the content of nitrogen oxides in the exhaust gas was reduced by about 50 vol.-% after its contacting with the particulate hydrophobic adsorber material compared to the nitrogen oxides content in the exhaust gas entering the cartridge comprising the particulate hydrophobic adsorber material.

The exhaust gas entering the cartridge comprising the particulate hydrophobic adsorber material had an average volume of about 100 ppm CO at a relative humidity close to saturation point (80 to 100 % rH). The exhaust gas exiting the cartridge comprising the particulate hydrophobic adsorber material had an average volume of about 50 ppm CO at a relative humidity close to saturation point (80 to 100 % rH).

As a result, the content of CO in the exhaust gas was reduced by about 50 vol.-% after its contacting with the particulate hydrophobic adsorber material compared to the CO content in the exhaust gas entering the cartridge comprising the particulate hydrophobic adsorber material.

## Claims

1. Method for reducing the nitrogen oxide(s) content in a combustion and/or exhaust gas of a vehicle and/or an industrial facility, the method comprising the steps of:
a) providing a particulate hydrophobic adsorber material, wherein the particulate hydrophobic adsorber material has a rod-like structure and is an aluminosilicate zeolite having a mole ratio of Si to Al (Si:Al) in the range from 40:1 to 10:1, and
i) being composed of regular three-dimensional pentagonal arrangements of atoms (pentasil units), and
ii) having a diameter in the range from 0.8 to 10 mm, and
iii) having a length in the range from 1 to 15 mm, and
iv) having a pore size of the channels in the range from 5.6 to 6.5 Å, and
v) having a BET specific surface area as measured by the BET nitrogen method of at least 400 m²/g,
b) providing a combustion and/or exhaust gas comprising water vapour and one or more nitrogen oxide(s), and
c) contacting the particulate hydrophobic adsorber material of step a) at a temperature ranging from 20 to 80 °C with the combustion and/or exhaust gas of step b) for adsorbing at least a part of the one or more nitrogen oxide(s) from the combustion and/or exhaust gas onto the surface and/or into the pores of the particulate hydrophobic adsorber material.

2. The method according to claim 1, wherein the particulate hydrophobic adsorber material is an aluminosilicate zeolite
i) being composed of regular three-dimensional pentagonal arrangements of atoms (pentasil units), wherein the pentasil units are linked together by oxygen bridges to form pentasil chains, preferably the pentasil chains are linked together by oxygen bridges to form corrugated sheets, and
ii) having a diameter in the range from 0.8 to 6 mm, preferably from 0.8 to 4 mm, more preferably from 0.8 to 2.5 mm and most preferably from 1.0 to 2.0 mm, and
iii) having a length in the range from 1.5 to 10 mm, preferably from 2.5 to 5 mm and most preferably from 2.8 to 4.5 mm, and
iv) having a pore size of the channels in the range from 5.8 to 6.2 Å, and
v) having a BET specific surface area as measured by the BET nitrogen method in the range from 400 to 1 000 m²/g, preferably from 400 to 800 m²/g.

3. The method according to any one of claim 1 or 2, wherein the particulate hydrophobic adsorber material of step a) is provided in form of a powder, crushed material, granulated powder, pellets, tablets, pressed or sintered material, filter material, in a column and/or cartridge.

4. The method according to any one of claims 1 to 3, wherein the combustion and/or exhaust gas of step b) is a gas mixture resulting from exhaust fumes, factory fumes, industrial fumes, vehicle exhausts, and mixtures thereof.

5. The method according to any one of claims 1 to 4, wherein the combustion and/or exhaust gas of step b) comprises water vapour in an amount of at least 10 g/Nm³, preferably in an amount ranging from 10 to 200 g/Nm³, more preferably front 10 to 150 g/Nm³ and most preferably from 10 to 100 g/Nm³ at a temperature of 0 to 100 °C and a pressure of 20 to 200 mbar, measured before its contacting with the adsorber material.

6. The method according to any one of claims 1 to 5, wherein the one or more nitrogen oxide(s) is/are selected from the group comprising NO, NO₂, N₂O, N₄O, N₂O₃, N₂O₄, N₂O₅, N₄O₆, NO₂⁻ , NO₃⁻ and mixtures thereof.

7. The method according to any one of claims 1 to 6, wherein the vehicle is selected from a car, truck, bus, ship, train, boat or aircraft and/or the industrial facility is selected from incineration plants, cement burning, refineries, biogas plants, production plants or steel industry.

8. The method according to any one of claims 1 to 7, wherein step c) is carried out at a temperature ranging from 25 to 80 °C and preferably from 30 to 80 °C.

9. The method according to any one of claims 1 to 8, wherein the reduction of the nitrogen oxide(s) content in the combustion and/or exhaust gas is substantially obtained by physisorption.

10. The method according to any one of claims 1 to 9, wherein the reduction of the nitrogen oxide(s) content in the combustion and/or exhaust gas is achieved when the nitrogen oxide(s) content in the combustion and/or exhaust gas obtained after contacting step c) is at least 10 vol.-%, more preferably at least 20 vol.-%, even more preferably at least 30 vol.-% and most preferably at least 35 vol-%, based on the total volume of nitrogen oxide(s) in the combustion and/or exhaust gas of step b), below the nitrogen oxide(s) content in the combustion and/or exhaust gas of step b).

11. Vehicle or industrial facility comprising a system for reducing the nitrogen oxide(s) content in the combustion and/or exhaust gas, the system comprising one or more unit(s) comprising a particulate hydrophobic adsorber material, wherein the particulate hydrophobic adsorber material has a rod-like structure and is an aluminosilicate zeolite having a mole ratio of Si to Al (Si:Al) in the range from 40:1 to 10:1, and
i) being composed of regular three-dimensional pentagonal arrangements of atoms (pentasil units), and
ii) having a diameter in the range from 0.8 to 10 mm, and
iii) having a length in the range from 1 to 15 mm, and
iv) having a pore size of the channels in the range from 5.6 to 6.5 Å, and
v) having a BET specific surface area as measured by the BET nitrogen method of at least 400 m²/g,
wherein the system is placed in the vehicle and/or the industrial facility.

12. Use of a particulate hydrophobic adsorber material having a rod-like structure and being an aluminosilicate zeolite having a mole ratio of Si to Al (Si:Al) in the range from 40:1 to 10:1 for reducing the nitrogen oxide(s) in a combustion and/or exhaust gas comprising water vapour of a vehicle and/or an industrial facility at a temperature ranging from 20 to 80 °C, wherein the particulate hydrophobic adsorber material is
i) being composed of regular three-dimensional pentagonal arrangements of atoms (pentasil units), and
ii) having a diameter in the range from 0.8 to 10 mm, and
iii) having a length in the range from 1 to 15 mm, and
iv) having a pore size of the channels in the range from 5.6 to 6.5 Å, and
v) having a BET specific surface area as measured by the BET nitrogen method of at least 400 m²/g.

## Patentansprüche

1. Verfahren zur Verringerung des Gehalts an einem oder mehreren Stickstoffoxiden in einem Verbrennungs- und/oder Abgas eines Fahrzeugs und/oder einer Industrieanlage, wobei das Verfahren die folgenden Schritte umfasst:
a) Bereitstellen eines partikelförmigen hydrophoben Adsorbermaterials, wobei das partikelförmige hydrophobe Adsorbermaterial eine stabförmige Struktur aufweist und ein Alumosilikat-Zeolith mit einem Molverhältnis von Si zu Al (Si:Al) im Bereich von 40:1 bis 10:1 ist und
i) aus regelmäßigen dreidimensionalen pentagonalen Anordnungen von Atomen (Pentasil-Einheiten) zusammengesetzt ist und
ii) einen Durchmesser im Bereich von 0,8 bis 10 mm aufweist und
iii) eine Länge im Bereich von 1 bis 15 mm aufweist und
iv) eine Porengröße der Kanäle im Bereich von 5,6 bis 6,5 Å aufweist und
v) eine nach dem BET-Stickstoffverfahren gemessene spezifische BET-Oberfläche von mindestens 400 m²/g aufweist,
b) Bereitstellen eines Wasserdampf und ein oder mehrere Stickstoffoxide umfassenden Verbrennungs- und/oder Abgases und
c) Inkontaktbringen des partikelförmigen hydrophoben Adsorbermaterials aus Schritt a) bei einer Temperatur im Bereich von 20 bis 80 °C mit dem Verbrennungs- und/oder Abgas aus Schritt b), um mindestens einen Teil des einen oder der mehreren Stickstoffoxide aus dem Verbrennungs- und/oder Abgas an der Oberfläche und/oder in den Poren des partikelförmigen hydrophoben Adsorbermaterials zu adsorbieren.

2. Das Verfahren nach Anspruch 1, wobei das partikelförmige hydrophobe Adsorbermaterial ein Alumosilikat-Zeolith ist, der
i) aus regelmäßigen dreidimensionalen pentagonalen Anordnungen von Atomen (Pentasil-Einheiten) zusammengesetzt ist, wobei die Pentasil-Einheiten über Sauerstoffbrücken miteinander verbunden sind, um Pentasil-Ketten zu bilden, wobei die Pentasil-Ketten vorzugsweise über Sauerstoffbrücken miteinander verbunden sind, um gewellte Schichten zu bilden, und
ii) einen Durchmesser im Bereich von 0,8 bis 6 mm, vorzugsweise von 0,8 bis 4 mm, weiter bevorzugt von 0,8 bis 2,5 mm und am meisten bevorzugt von 1,0 bis 2,0 mm aufweist und
iii) eine Länge im Bereich von 1,5 bis 10 mm, vorzugsweise von 2,5 bis 5 mm und am meisten bevorzugt von 2,8 bis 4,5 mm aufweist und
iv) eine Porengröße der Kanäle im Bereich von 5,8 bis 6,2 Å aufweist und
v) eine nach dem BET-Stickstoffverfahren gemessene spezifische BET-Oberfläche im Bereich von 400 bis 1 000 m²/g, vorzugsweise von 400 bis 800 m²/g, aufweist.

3. Das Verfahren nach Anspruch 1 oder 2, wobei das partikelförmige hydrophobe Adsorbermaterial aus Schritt a) in Form von Pulver, zerkleinertem Material, granuliertem Pulver, Pellets, Tabletten, gepresstem oder gesintertem Material, Filtermaterial, in einer Säule und/oder einer Kartusche bereitgestellt wird.

4. Das Verfahren nach einem der Ansprüche 1 bis 3, wobei das Verbrennungs- und/oder Abgas aus Schritt b) ein Gasgemisch ist, das aus Abgasen, Fabrikabgasen, Industrieabgasen, Fahrzeugabgasen und Mischungen davon resultiert.

5. Das Verfahren nach einem der Ansprüche 1 bis 4, wobei das Verbrennungs- und/oder Abgas aus Schritt b) Wasserdampf in einer Menge von mindestens 10 g/Nm³, vorzugsweise in einer Menge im Bereich von 10 bis 200 g/Nm³, weiter bevorzugt von 10 bis 150 g/Nm³ und am meisten bevorzugt von 10 bis 100 g/Nm³ bei einer Temperatur von 0 bis 100 °C und einem Druck von 20 bis 200 mbar umfasst, gemessen vor seinem Inkontaktbringen mit dem Adsorbermaterial.

6. Das Verfahren nach einem der Ansprüche 1 bis 5, wobei das eine oder die mehreren Stickstoffoxide aus der Gruppe ausgewählt ist bzw. sind, die NO, NO₂, N₂O, N₄O, N₂O₃, N₂O₄, N₂O₅, N₄O₆, NO₂⁻, NO₃⁻ und Mischungen davon umfasst.

7. Das Verfahren nach einem der Ansprüche 1 bis 6, wobei das Fahrzeug aus einem Personenkraftwagen, Lastkraftwagen, Bus, Schiff, Zug, Boot oder Luftfahrzeug ausgewählt ist und/oder die Industrieanlage aus Müllverbrennungsanlagen, Zementwerken, Raffinerien, Biogasanlagen, Produktionsanlagen oder der Stahlindustrie ausgewählt ist.

8. Das Verfahren nach einem der Ansprüche 1 bis 7, wobei Schritt c) bei einer Temperatur im Bereich von 25 bis 80 °C und vorzugsweise von 30 bis 80 °C durchgeführt wird.

9. Das Verfahren nach einem der Ansprüche 1 bis 8, wobei die Verringerung des Gehalts an einem oder mehreren Stickstoffoxiden in dem Verbrennungs- und/oder Abgas im Wesentlichen durch Physisorption erzielt wird.

10. Das Verfahren nach einem der Ansprüche 1 bis 9, wobei die Verringerung des Gehalts an einem oder mehreren Stickstoffoxiden in dem Verbrennungs- und/oder Abgas erreicht wird, wenn der nach dem Inkontaktbringen gemäß Schritt c) erhaltene Gehalt an einem oder mehreren Stickstoffoxiden in dem Verbrennungs- und/oder Abgas um mindestens 10 Vol.-%, weiter bevorzugt um mindestens 20 Vol.-%, noch weiter bevorzugt um mindestens 30 Vol.-% und am meisten bevorzugt um mindestens 35 Vol.-%, bezogen auf das Gesamtvolumen des einen oder der mehreren Stickstoffoxide in dem Verbrennungs- und/oder Abgas aus Schritt b), unter dem Gehalt an einem oder mehreren Stickstoffoxiden in dem Verbrennungs- und/oder Abgas aus Schritt b) liegt.

11. Fahrzeug oder Industrieanlage, umfassend ein System zur Verringerung des Gehalts an einem oder mehreren Stickstoffoxiden in dem Verbrennungs- und/oder Abgas, wobei das System eine oder mehrere Einheiten umfasst, die ein partikelförmiges hydrophobes Adsorbermaterial umfassen, wobei das partikelförmige hydrophobe Adsorbermaterial eine stabförmige Struktur aufweist und ein Alumosilikat-Zeolith mit einem Molverhältnis von Si zu Al (Si:Al) im Bereich von 40:1 bis 10:1 ist und
i) aus regelmäßigen dreidimensionalen pentagonalen Anordnungen von Atomen (Pentasil-Einheiten) zusammengesetzt ist und
ii) einen Durchmesser im Bereich von 0,8 bis 10 mm aufweist und
iii) eine Länge im Bereich von 1 bis 15 mm aufweist und
iv) eine Porengröße der Kanäle im Bereich von 5,6 bis 6,5 Å aufweist und
v) eine nach dem BET-Stickstoffverfahren gemessene spezifische BET-Oberfläche von mindestens 400 m²/g aufweist,
wobei das System in dem Fahrzeug und/oder der Industrieanlage angeordnet ist.

12. Verwendung eines partikelförmigen hydrophoben Adsorbermaterials, das eine stabförmige Struktur aufweist und ein Alumosilikat-Zeolith mit einem Molverhältnis von Si zu Al (Si:Al) im Bereich von 40:1 bis 10:1 ist, zur Verringerung eines oder mehrerer Stickstoffoxide in einem Wasserdampf umfassenden Verbrennungs- und/oder Abgas eines Fahrzeugs und/oder einer Industrieanlage bei einer Temperatur im Bereich von 20 bis 80 °C, wobei das partikelförmige hydrophobe Adsorbermaterial
i) aus regelmäßigen dreidimensionalen pentagonalen Anordnungen von Atomen (Pentasil-Einheiten) zusammengesetzt ist und
ii) einen Durchmesser im Bereich von 0,8 bis 10 mm aufweist und
iii) eine Länge im Bereich von 1 bis 15 mm aufweist und
iv) eine Porengröße der Kanäle im Bereich von 5,6 bis 6,5 Å aufweist und
v) eine nach dem BET-Stickstoffverfahren gemessene spezifische BET-Oberfläche von mindestens 400 m²/g aufweist.

## Revendications

1. Procédé de réduction de la teneur en un ou plusieurs oxydes d'azote dans un gaz de combustion et/ou d'échappement d'un véhicule et/ou d'une installation industrielle, le procédé comprenant les étapes consistant à :
a) fournir un matériau adsorbant hydrophobe particulaire, le matériau adsorbant hydrophobe particulaire présentant une structure en forme de tige et étant une zéolithe aluminosilicatée ayant un rapport molaire de Si à Al (Si:Al) compris entre 40:1 et 10:1, et
i) étant constitué d'agencements pentagonaux tridimensionnels réguliers d'atomes (unités pentasil), et
ii) ayant un diamètre compris entre 0,8 et 10 mm, et
iii) ayant une longueur comprise entre 1 et 15 mm, et
iv) ayant une taille de pores des canaux comprise entre 5,6 et 6,5 Å, et
v) ayant une surface spécifique BET, mesurée par la méthode BET à l'azote, d'au moins 400 m²/g,
b) fournir un gaz de combustion et/ou d'échappement comprenant de la vapeur d'eau et un ou plusieurs oxydes d'azote, et
c) mettre le matériau adsorbant hydrophobe particulaire de l'étape a), à une température comprise entre 20 et 80 °C, en contact avec le gaz de combustion et/ou d'échappement de l'étape b) afin d'adsorber au moins une partie du ou des oxydes d'azote du gaz de combustion et/ou d'échappement sur la surface et/ou dans les pores du matériau adsorbant hydrophobe particulaire.

2. Procédé selon la revendication 1, dans lequel le matériau adsorbant hydrophobe particulaire est une zéolithe aluminosilicatée
i) constituée d'agencements pentagonaux tridimensionnels réguliers d'atomes (unités pentasil), les unités pentasil étant reliées entre elles par des ponts oxygène pour former des chaînes pentasil, de préférence les chaînes pentasil étant reliées entre elles par des ponts oxygène pour former des feuillets ondulés, et
ii) ayant un diamètre compris entre 0,8 et 6 mm, de préférence entre 0,8 et 4 mm, plus préférentiellement entre 0,8 et 2,5 mm et le plus préférentiellement entre 1,0 et 2,0 mm, et
iii) ayant une longueur comprise entre 1,5 et 10 mm, de préférence entre 2,5 et 5 mm et le plus préférentiellement entre 2,8 et 4,5 mm, et
iv) ayant une taille de pores des canaux comprise entre 5,8 et 6,2 Å, et
v) ayant une surface spécifique BET, mesurée par la méthode BET à l'azote, comprise entre 400 et 1 000 m²/g, de préférence entre 400 et 800 m²/g.

3. Procédé selon l'une quelconque des revendications 1 ou 2, dans lequel le matériau adsorbant hydrophobe particulaire de l'étape a) est fourni sous forme de poudre, de matériau broyé, de poudre granulée, de granulés, de pastilles, de matériau pressé ou fritté, de matériau filtrant, dans une colonne et/ou une cartouche.

4. Procédé selon l'une quelconque des revendications 1 à 3, dans lequel le gaz de combustion et/ou d'échappement de l'étape b) est un mélange gazeux résultant de gaz d'évacuation, de fumées d'usine, de fumées industrielles, de gaz d'échappement de véhicules et de mélanges de ceux-ci.

5. Procédé selon l'une quelconque des revendications 1 à 4, dans lequel le gaz de combustion et/ou d'échappement de l'étape b) comprend de la vapeur d'eau en une quantité d'au moins 10 g/Nm³, de préférence en une quantité comprise entre 10 et 200 g/Nm³, plus préférentiellement entre 10 et 150 g/Nm³ et le plus préférentiellement entre 10 et 100 g/Nm³, à une température de 0 à 100 °C et à une pression de 20 à 200 mbar, mesurée avant sa mise en contact avec le matériau adsorbant.

6. Procédé selon l'une quelconque des revendications 1 à 5, dans lequel le ou les oxydes d'azote sont choisis dans le groupe comprenant NO, NO₂, N₂O, N₄O, N₂O₃, N₂O₄, N₂O₅, N₄O₆, NO₂⁻, NO₃⁻ et leurs mélanges.

7. Procédé selon l'une quelconque des revendications 1 à 6, dans lequel le véhicule est choisi parmi une voiture, un camion, un autobus, un navire, un train, un bateau ou un aéronef et/ou l'installation industrielle est choisie parmi des usines d'incinération, des cimenteries, des raffineries, des installations de biogaz, des installations de production ou l'industrie sidérurgique.

8. Procédé selon l'une quelconque des revendications 1 à 7, dans lequel l'étape c) est réalisée à une température comprise entre 25 et 80 °C et de préférence entre 30 et 80 °C.

9. Procédé selon l'une quelconque des revendications 1 à 8, dans lequel la réduction de la teneur en un ou plusieurs oxydes d'azote dans le gaz de combustion et/ou d'échappement est sensiblement obtenue par physisorption.

10. Procédé selon l'une quelconque des revendications 1 à 9, dans lequel la réduction de la teneur en un ou plusieurs oxydes d'azote dans le gaz de combustion et/ou d'échappement est obtenue lorsque la teneur en un ou plusieurs oxydes d'azote dans le gaz de combustion et/ou d'échappement obtenu après la mise en contact selon l'étape c) est inférieure d'au moins 10 % en volume, plus préférentiellement d'au moins 20 % en volume, encore plus préférentiellement d'au moins 30 % en volume et le plus préférentiellement d'au moins 35 % en volume, sur la base du volume total du ou des oxydes d'azote dans le gaz de combustion et/ou d'échappement de l'étape b), à la teneur en un ou plusieurs oxydes d'azote dans le gaz de combustion et/ou d'échappement de l'étape b).

11. Véhicule ou installation industrielle comprenant un système destiné à réduire la teneur en un ou plusieurs oxydes d'azote dans le gaz de combustion et/ou d'échappement, le système comprenant une ou plusieurs unités comprenant un matériau adsorbant hydrophobe particulaire, le matériau adsorbant hydrophobe particulaire présentant une structure en forme de tige et étant une zéolithe aluminosilicatée ayant un rapport molaire de Si à Al (Si:Al) compris entre 40:1 et 10:1, et
i) étant constitué d'agencements pentagonaux tridimensionnels réguliers d'atomes (unités pentasil), et
ii) ayant un diamètre compris entre 0,8 et 10 mm, et
iii) ayant une longueur comprise entre 1 et 15 mm, et
iv) ayant une taille de pores des canaux comprise entre 5,6 et 6,5 Å, et
v) ayant une surface spécifique BET, mesurée par la méthode BET à l'azote, d'au moins 400 m²/g,
le système étant disposé dans le véhicule et/ou l'installation industrielle.

12. Utilisation d'un matériau adsorbant hydrophobe particulaire présentant une structure en forme de tige et étant une zéolithe aluminosilicatée ayant un rapport molaire de Si à Al (Si:Al) compris entre 40:1 et 10:1, pour réduire un ou plusieurs oxydes d'azote dans un gaz de combustion et/ou d'échappement d'un véhicule et/ou d'une installation industrielle, ledit gaz comprenant de la vapeur d'eau, à une température comprise entre 20 et 80 °C, dans laquelle le matériau adsorbant hydrophobe particulaire
i) est constitué d'agencements pentagonaux tridimensionnels réguliers d'atomes (unités pentasil), et
ii) a un diamètre compris entre 0,8 et 10 mm, et
iii) a une longueur comprise entre 1 et 15 mm, et
iv) a une taille de pores des canaux comprise entre 5,6 et 6,5 Å, et
v) a une surface spécifique BET, mesurée par la méthode BET à l'azote, d'au moins 400 m²/g.
